# EUROPEAN PATENT SPECIFICATION

(11) **EP 3 853 422 B1**
(45) Date of publication and mention of the grant of the patent: **07.05.2025**
(21) Application number: 19778457.2
(22) Date of filing: 20.09.2019
(51) Int. Cl.: E04B 1/80, C09K 5/06, F24F 5/00, F28D 20/02, E04B 1/74, F24S 60/10, B65D 6/06

(54) **THERMAL STRUCTURE FOR BUILDINGS**
THERMISCHE STRUKTUR FÜR GEBÄUDE
STRUCTURE THERMIQUE POUR BÂTIMENTS

(30) Priority: 21.09.2018 ES 201830915
(43) Date of publication of application: 28.07.2021
(73) Proprietor: Universitat de Lleida, 25003 Lleida (ES)
(72) Inventor: DE GRACIA CUESTA, Álvaro, 25001 Lleida (ES); PÉREZ LUQUE, Gabriel, 25001 Lleida (ES)
(74) Representative: ZBM Patents - Zea, Barlocci & Markvardsen
(86) International application number: PCT/EP2019/075397
(87) International publication number: WO 2020/058500

(56) References cited:
- WO-A1-2017/185127
- WO-A1-87/00569
- US-A- 4 290 416
- US-A1- 2012 055 463

## Description

This application claims the benefit of Spanish Patent Application ES201830915A filed September 21st 2018.

### TECHNICAL FIELD

The present description belongs to the building sector, and it relates to thermal structures for buildings intended to optimize cooling and heating of the inside of the above mentioned buildings.

### BACKGROUND

The building sector is responsible for consuming large amounts of global final energy.

According to the International Energy Agency, the building sector roughly emits one third of all greenhouse gas emissions. In Europe, 50% of the energy use, as well as related gas emissions, corresponds to space heating and cooling systems. This value will tend to increase if no actions are considered: a significant rise in cooling energy demand, of the order of 150% on a global scale, and of 300-600% in developing countries, is expected by 2050.

In this context, an appropriate design of building envelope (walls, ceilings) has a crucial impact on reducing building energy use while maintaining occupants' thermal comfort. An attempt for reducing the building energy consumption is through the use of phase change materials (PCMs). PCMs are characterized by their ability to absorb or release large amounts of thermal energy at a substantially constant temperature when changing state, for example, from solid to liquid and vice versa. Absorption or release of thermal energy by such materials takes place within a given temperature range. The use of PCMs extends both to newly constructed buildings and to refurbishment of old buildings. PCMs typically apply to parts of buildings such as, for example, parts of walls, rooftops, etc. Specially, the use of PCMs is known as yet an additional layer of one or several parts of a building, such as fixed gypsum boards with microencapsulated PCM, aluminium boards with macroencapsulated PCM, aluminium sheets with ethanol including PCM, etc.

In the building sector, the PCM is typically applied to the inside of walls and windows, after thermal insulation. In the melting process, the PCM accumulates energy during the hottest hours of the day and avoids heat inflow inside the building. During the night, the PCM material releases most of the heat accumulated during the day to the inside of the building.

In Waqas A., "Thermal management of conventional PV panel using PCM with movable shutters. A numerical study", Solar Energy, vol. 158, Dec 2017, p. 797-807 a photovoltaic panel including rotatable shutters containing PCM is disclosed. During sunshine hours, said rotatable shutters are rotated into a position suitable to absorb thermal energy. During non-sunshine hours, said rotatable shutters are rotated into another position such that the thermal energy that has been absorbed by the PCM during sunshine hours, which was in the liquid state, is released, so that the PCM is solidified and it is loaded for the following day.

US patent application 2013228308 discloses a wall including a PCM pellet module, and dampers to adjust the airflow around the wall and inside the building, for example, in a room. During the day, the dampers close allowing solar radiation to heat up the air between the window and the module and, at night-time, the above mentioned wall's dampers are opened to allow circulation of room air and release of solar energy stored for heating the room. The PCM module includes wheels arranged in the bottom thereof. Said wheels are intended to allow the user to change the position of the PCM module at night-time so as to change the thermal mass. In another example disclosed in said patent, the PCM module is configured as a rotating wheel that is mounted in the ceiling, so that a part thereof, such as a half thereof, stays outside of the building, and another part thereof, that is, the other half, stays inside of the building. The wheel can be rotated, for example 180°, so that a part thereof moves from the inside into the outside of the building such that heat that has been accumulated during the day is released to the outside at night.

Patent document ES2558902 discloses an invertible prefabricated wall for passive air conditioning whose configuration can be varied by means of a mechanical system. Such mechanical system is formed of vertical elements that can be rotated for the purpose of having either one or the other face thereof towards the outside of the building. As a result, it can be switched from a heating configuration to a cooling configuration, and vice versa. The vertical elements have containers intended to receive a PCM for storing thermal energy. In the heating configuration, the vertical elements are arranged facing the outside for collecting solar radiation, which is stored by the PCM. In the cooling configuration, positioning of the vertical elements is reversed by means of said mechanical system, such that the PCM remains protected from the outside by an insulating plate that reflects the solar radiation.

The way in which the PCM is applied in building structures is described, for example, in Memon, Shazim, Phase change materials integrated in building walls: a state of the art review. Renewable and Sustainable Energy Reviews. 31 (2014) 870-906. 10.1016/j.rser.2013.12.042. In this document, several techniques for incorporation of PCM such as direct incorporation, immersion, vacuum impregnation, encapsulation, shape-stabilization, and in form-stable composites are proposed.

In Izquierdo-Barrientos M.A, Belmonte J.F, Rodriguez - Sánchez D, Molina A.E, Almendros-lbáñez J.A. A numerical study of external Building wall containing phase change material (PCM). Applied thermal engineering 47 (2012) 73-85, and in Fateh A, Klinker F, Brütting M, Weinläder H, Devia F. Numerical and Experimental investigation of an insulation layer with PCMs. Energy and Buildings 153 (2017) 231-240 numerical models to analyze the impact on building indoor temperature for the application of PCM in a wall are proposed, showing that this material reduces heating costs.

WO 87/00569 A1 discloses a thermal structure for buildings, comprising a first layer facing the outside of the building, a second layer adjacent to the first layer and a third layer with a first extension, and a second extension, said third layer including a phase change material and being mounted to be able to move surrounding the second layer, to arrange the first extension or the second extension of the third layer facing the inside or the outside of the building, wherein the thermal structure further includes driving means to arrange part of said first or second extensions of the third layer facing the inside or the outside of the building.

One disadvantage from prior art structures using PCM is that, during winter, the fact that the PCM material is placed inside of the building limits its application exclusively to indoor areas where the sun is radiated directly. As a result, no commercial applications practically exist beyond development prototypes. On the other hand, during summer, the fact that the PCM material is placed in the inside limits its possibilities for being solidified during night time hours, due to the fact that an insulating layer is typically provided that protects it from low or moderate night temperatures. Such insolation is necessary from an energy point of view and, in addition, this is usually required by the legislation in most technical building codes. On the other hand, since much of the heat accumulated by the PCM during the day is released to the inside, many days the PCM material does not solidify at night and, therefore, it is not useful for the following day, which is a disadvantage.

There thus exists the need for a thermal structure for buildings with which the thermal performance inside of a building can be improved, optimizing cooling refrigeration and heating consumption.

### SUMMARY

A technology for thermal structures in buildings is provided based on the dynamic use of a material suitable to absorb and/or to release heat according to the temperature of the environment where said material is exposed. A non-limiting example of said material is a phase change material (PCM).

For the sake of simplicity and in order to assist in understanding the present disclosure, "PCM" will be referred hereinafter to as the material used. Nevertheless, this is not limited to use of the above mentioned material and any other suitable material capable of absorbing and releasing thermal energy in a phase change may be used. Thus, any reference to PCM herein should be understood as extended to any material capable of absorbing and releasing thermal energy in a phase change.

In particular, the thermal structure described herein is adapted to be applied to walls made, for example, from ceramic material (bricks, etc.) and/or in building rooftops, with which the above described problems are overcome, and with which further additional advantages are obtained, as it will be disclosed hereinafter. Many other different applications are however not ruled out for the proposed technology.

The present thermal structure comprises at least a first layer, a second layer, a third layer and, optionally, at least a fourth layer. The above mentioned layers are described in detail hereinbelow.

The first layer of the thermal structure is arranged facing the inside or the outside of the building. The second layer of the thermal structure is arranged adjacent to the first layer. The second layer is made from a thermal insulating material. The third layer of the thermal structure, which has a sheet configuration, is arranged surrounding the second layer. In one particular example, the third layer may be, for example, a dense sheet, which may be made from a fire resistant material, or from a material that provides acoustic isolation to give protection from outside noise so as to limit noise from mechanical elements, etc., as required, or in another type of material.

Such third layer of the thermal structure has a first extension and a second extension.

As used herein, the terms "first extension" and "second extension" refer to a portion of the surface of the third layer. The first extension and the second extension in said third layer may, for example, correspond to respective faces or portions of the surface of the third layer on one and the other side of the second layer, one of them being partially or completely facing the inside of the building, and the other of them being partially or completely facing the outside of the building. In one example, the first extension can take up 50% of the length of the third layer, and the second extension can take up the other 50% of the length of the third layer.

At least one of the extensions of the third layer includes a material suitable for absorbing and/or releasing heat according to the temperature of the environment where said material, namely a PCM, is exposed. More specifically, the first extension or the second extension, or both the first extension and the second extension of the third layer are entirely or partially made of the above mentioned material. Examples where PCM is both in the first extension and in the second extension of the third layer are not however ruled out, but having different thermal characteristics, in terms of, for example, melting temperature. It is also envisaged that the third layer is made of a base material, such as a dense polymeric plate, to which the above mentioned PCM material or the like is subsequently applied. The third layer may be thus made of an encapsulated material and/or microparticles and/or a material applied by direct incorporation, and/or by immersion, and/or by impregnation in at least one of the first one or the second extension of the third layer. Application of encapsulated PCM allows PCM mass loss due to leakage to be avoided while melted, or in a melting phase.

According to an important feature of the present thermal structure, the third layer is movable, that is, its position relative to the second layer can be varied. In particular, the third layer is mounted to the structure surrounding the second layer, as noted above, between this and the first layer. The third layer can be thus moved around the second layer. The movement of the third layer allows the first extension or the second extension thereof to be arranged facing the inside or the outside of the building, according to thermal requirements. The third layer can be thus driven so as to arrange one extension thereof, for example, having PCM, exposed to the outside of the building for absorbing energy from the sun during the day, and the other extension, for example, an extension not having PCM, or having PCM with different thermal characteristics (for example, PCM that melts at a different temperature from the PCM of the other extension) exposed to the inside of the building to release energy.

The dynamic nature of the present thermal structure in which the position of the third layer can be varied freely and in a controlled manner relative to the second layer (thermal insulating layer, for example) allows PCM solidification to be greatly facilitated. Advantageously, this makes it possible to use PCM with lower melting temperature, for example, of the order of 22°C, relative to the melting temperature of the PCM in static systems, of the order of 24°C. As result, the present thermal structure is more efficient at low temperatures at night. The potential of the present thermal structure where the PCM solidifies at low temperatures thus allows the present technology to be advantageously used not only as a thermal barrier but also as a cooling system in summer. In addition, the dynamic nature of the third layer of the present thermal structure allows it to be placed, during hours of sun in winter, such that the PCM is arranged towards the outside of the building, that is, adjacent to the outside part of the second layer, so that it stores solar energy by melting of the PCM; and, during heating demand hours, such that the PCM is suitably arranged facing the inside of the building, that is, adjacent to the inside part of the second layer, such that solar energy accumulated is released by solidification of the PCM.

As stated above, the present thermal structure may optionally be further provided with at least a fourth layer. The present thermal structure may thus include more than four layers, with gypsum boards covering the bricks or other building systems being thus possible, for example, to be included. When said at least one fourth layer is provided, in addition to the first layer, the second layer, and the third layer of the above described thermal structure, the first layer may be arranged facing the inside of the building and this fourth layer may be arranged facing the outside of the building, or vice versa. The second layer and the third layer may be arranged between both the first and fourth layers, with the third layer surrounding the second layer, such that the former can be driven surrounding the latter, as stated above. The movement of the third layer allows its first extension or its second extension to be entirely or partially arranged facing the first layer or the fourth layer, that is, with the first extension or the second extension entirely or partially adjacent to the inside face or to the outside face of the second layer so as to be arranged entirely or partially facing the inside or the outside of the building, as required. The thermal behaviour of the thermal structure can be thus suitably changed in order to accumulate/release heat as desired or required, without changing the order of the layers included therein.

Provision of driving means in the present thermal structure is also envisaged in order to move the third layer with the above mentioned purpose, that is, to change its position and to arrange it with its first extension or its second extension facing the inside or the outside of the building, according to thermal requirements. By way of example, the means for driving the third layer may include opposed rotating rollers suitably positioned such that the third layer is arranged there between. Other mechanical mechanisms may be used for driving the third layer, such as rotating bars, slats, moving panels, etc. Such rotating rollers, rotating bars, slats, moving panels, etc. may be driven, for example, by one or more electrical servo motors. The possibility of driving them manually, or even in both ways, that is, both manually and motor driven, are however not ruled out. The means for driving the third layer are not limited only to means of the mechanical type, and they could be hydraulic means, for example. In such a case, the driving means could comprise, for example, an air injection mechanism for suitably causing PCM particles to move so as to travel between the first layer and the second layer, and between the fourth layer and the second layer in order to change the structure thermal behavior as required.

The present thermal structure for buildings may further include control means for controlling said driving means. Such control means may be configured to cause automatic cyclical movement of the third layer relative to the other layers (the first layer, the second layer, and the fourth layer, if provided) in order to position the first extension or the second extension of the third layer facing the inside or the outside of the building according to thermal requirements, that is, in a position adjacent to an inside face or in a position adjacent to an outside face of the second layer, as required, as described above.

Automatic cyclical movement of the third layer may be suitably controlled through the above mentioned control means in order to have a given frequency, that is, to impart a movement repeated over time to the third layer. For example, the control means may be suitably configured to impart the third layer a daily automatic cyclical movement and to arrange the PCM facing the inside or the outside of the building for a period of time. The use of a predictive software associated with the control means, appropriately programmed to operate the driving means according to statistical parameters stored in a database with historical weather data of a particular area where the present thermal structure is installed is not ruled out.

Many advantages have been found derived from the thermal structure with dynamic use of phase change materials in building envelopes such as walls, vertical walls, roofs, etc.

The ability of the above described thermal structure to change the position of the PCM layer relative to the thermal insulating layer in a controlled way allows the solidification of lower melting temperature PCMs over conventional static systems. This allows the present thermal structure to be used not only as a thermal barrier but as a cooling system, as stated above, which greatly increases the thermal advantages and potential of using PCM in building envelopes. Also, the use of PCM in a dynamic layer is advantageous since it has been shown that the ability of the PCM to store and to release thermal energy cyclically is maintained for a long time without loss of efficiency.

The described thermal structure combines beneficial aspects of static or passive conventional systems with the present dynamic or active technology that has been described, with which a thermal structure adaptable to different thermal conditions is obtained. Such ability to combine an active dynamic character with a passive static character, as required, offers significant energy savings, especially in winter sunny times, while reducing thermal demand both for heating and cooling, and providing a control on when accumulated heat or cold is released.

The present thermal structure also has the advantage that it can be entirely or partially applied to a wide range of building elements, such as walls, roofs, and vertical, horizontal, and sloping structures in general, whether they are traditional, modern, with various finishes and materials, opaque, transparent, semi-transparent, inside and/or outside, etc. When transparent materials are used, the movement of the third layer, for example, the PCM sheet or the encapsulates thereof, could be seen from the outside. Furthermore, the dynamic nature of the third layer advantageously allows its aesthetic appearance to be changed during the day or at night, both inside and outside, if desired, according to the decoration applied to the third layer of the structure. It is thus possible to obtain multiple changing aesthetic effects in inside and/or outside areas in facades and roofs and an interesting additional artistic and architectural impact on the building is therefore obtained.

The present thermal structure further provides the advantage that, in addition to being very effective, it requires little space since it is a sheet structure or the like and allows to be architectonically integrated into any building easily. A further interesting advantage of the present thermal structure is that costs can be easily redeemed given the high thermal efficiency provided.

Further advantages and features of the present thermal structure will become apparent to those skilled in the art upon examination of the description or may be learned by practice thereof.

### BRIEF DESCRIPTION OF THE DRAWINGS

One non-limiting particular example of the present thermal structure will be described below with reference to the drawings enclosed herein, in which:

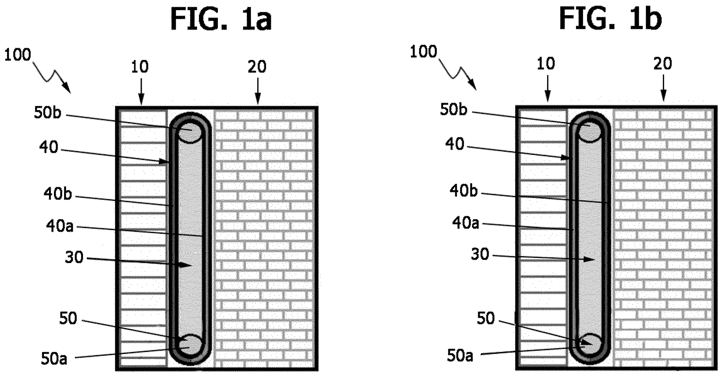

Figures 1a and 1b are general diagrammatical views showing one possible example of the present thermal structure, with figure 1a showing the third layer of the thermal structure with its first extension, having PCM facing the inside of the building and with its second extension, which does not have PCM, facing the outside of the building; and with figure 1b showing the third layer of the thermal structure with the said first extension facing the outside of the building and with the above mentioned second extension facing the inside of the building; and

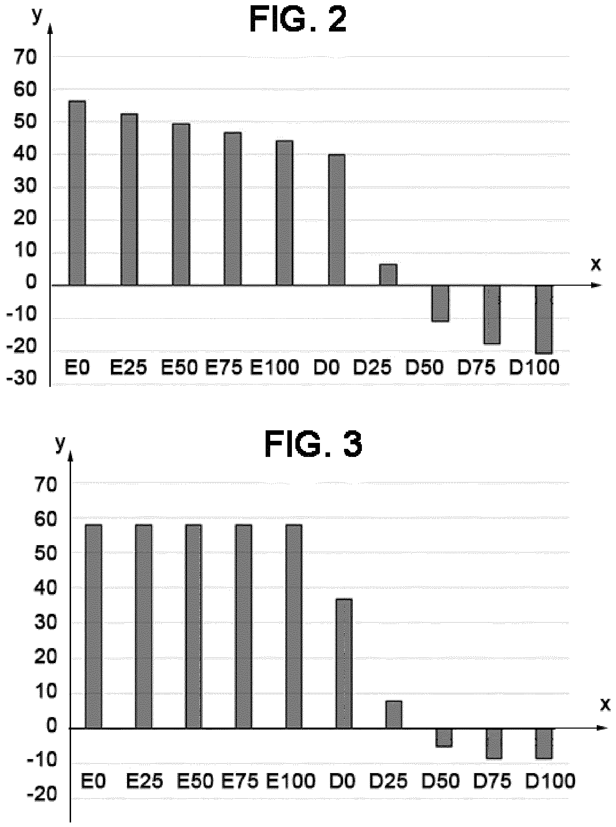

Figures 2 and 3 are graphs showing daily thermal load per surface unit (Wh/m²·day) versus the PCM percent in the third layer and the type of thermal structure, in a cooling mode and in a heating mode, respectively.

### DETAILED DESCRIPTION OF AN EXAMPLE

One non-limiting example of a thermal structure for buildings is described below, which has been indicated as a whole with reference numeral 100 in the figures of the drawings. The thermal structure 100 described below by way of an example is applied to a ceramic wall of a building. Other applications are possible.

The present thermal structure 100, according to diagrammatic view of figures 1a and 1b of the drawings, comprises a first layer 10, a second layer 30, a third layer 40, and a fourth layer 20. The first, second, and third layers 10, 30, 40 of the present thermal structure 100 are essential, while the fourth layer 20 is optional, and more than a fourth one layer 20 may be provided. Said layers 10, 20, 30, 40 are described in detail below.

The first layer 10 of the thermal structure 100 in the non-limiting example shown is a ceramic brick layer facing the outside of the building. It is clear that the above mentioned first layer 10 may be made of other different materials and that it may be arranged facing the inside of the building.

The fourth layer 20 of the thermal structure 100 in the above mentioned example is a ceramic brick layer facing the inside of the building. It is also clear that the above mentioned fourth layer 20 may be made of other different materials, which may be arranged facing the outside of the building and wherein, as stated above, more than one fourth layer 20 may be provided.

The second layer 30 of the thermal structure 100 is arranged between the first layer 10 and the fourth layer 20. In the non-limiting example that is disclosed herein, said second layer 30 is made of a suitable thermal insulating material.

The third layer 40 of the thermal structure 100 is arranged between the first layer 10, which is arranged facing the outside of the building, and the fourth layer 20, which is arranged facing the inside of the building, as stated above. The above mentioned third layer 40 is made of a dense polymeric plate, for example, 7 mm thick, arranged surrounding the second layer 30.

By arranging the third layer 40 surrounding the second layer 30, as stated above, said third layer 40 has a first extension 40a and a second extension 40b. In the particular non-limiting example diagrammatically shown in figures 1a and 1b of the drawings, the first extension 40a of the third layer 40 is made of a material suitable for absorbing and/or releasing heat according to the temperature of the environment where said material is exposed. In the example herein disclosed, the above mentioned material is a polymeric matrix phase change material, or PCM. The PCM may be applied to the first extension 40a of the third layer 40 as an encapsulated material and/or in microparticles and/or for direct incorporation, and/or by immersion, and/or by impregnation. For its part, the second extension 40b of the third layer 40, in a non-limiting particular example shown in figures 1a and 1b of the drawings, does not include PCM or similar. Nevertheless, other cases are not ruled out, such as for example, where both extensions 40a, 40b include PCM absorbing and/or releasing heat at different temperatures between the extensions 40a, 40b of the third layer. In this way, one extension of the third layer 40 could have a PCM melting at 25°C and the other extension of the third layer 40 could have a PCM melting at a temperature of 20°C, for example.

In the particular example of the thermal structure 100 that is diagrammatically shown in figures 1a and 1b, the first extension 40a corresponds to half of the third layer 40 and the second extension 40b corresponds to another half of the third layer 40. An extension 40a of the third layer 40 is herein defined as the side of the third layer 40 temporarily placed adjacent to the outer side of the second layer 30. The other extension 40b of the third layer 40 is herein defined as the opposite side of said third layer 40 that is temporarily placed adjacent to the indoor side of the second layer 30.

Thus, in the specific position shown in figure 1a, the third layer 40 remains temporarily arranged with its first extension 40a, having PCM facing the inside of the building; and with its second extension 40b, that does not have PCM, facing the outside of the building. And, in the specific position shown in figure 1b, the third layer 40 remains temporarily arranged with its first extension 40a facing the outside of the building, and with its second extension 40b facing the inside of the building.

The position of the third layer 40 relative to the second layer 30, as stated above and as shown in both figures 1a, 1b, is temporary: the position of the third layer 40 may be altered since it can be moved, that is, its position around the second layer 30, between the first layer 10 and the fourth layer 20, can be changed so as to be in the specific position shown in figure 1a or figure 1b. The orientation of the extensions 40a, 40b of the third layer 40 can be thus advantageously varied towards the inside or towards the outside of the building so as to change the thermal behavior of the structure 100, storing or releasing heat according to thermal requirements, without changing the order of the layers included therein.

Although not shown in the figures, the third layer 40 is susceptible to include various decorative elements in one or in both of its extensions or sides 40a, 40b, or even be transparent, or semi-transparent. Also, the third layer 40 of the present thermal structure 100 may be made of an acoustic insulating material, and/or fire resistant, as required.

In the example that is diagrammatically shown in figures 1a and 1b of the drawings, driving means 50 are provided to move the third layer 40 around the second layer 30, or insulating layer, relative to the other layers of the thermal structure 100. In the non-limiting example shown in figure 1a and 1b of the drawings, the driving means 50 comprise two opposite rotating rollers 50a, 50b around which the third layer 40 is arranged. The rotating rollers 50a, 50b are driven in rotation, both directly or through a suitable transmission means such as pulleys, by means of one or several electrical servo motors (not shown).

Rotation of rollers 50a, 50b by the driving means 50 causes the movement of the third layer 40 around the second layer 30 of the thermal structure 100, as stated above, so as to be arranged with its first extension 40a or its second extension 40b facing the inside or the outside of the building, as appropriate, according to thermal requirements. The amount of displacement caused by rotation of the rollers 50a, 50b to the third layer 40 and the time when the movement of the third layer 40 is caused is suitably adjusted by suitable control means, not shown. The above mentioned control means are preferably configured to cause a daily automatic cyclical movement of the third layer 40 around the second layer 30, or insulating layer, in order to arrange one or the other extension 40a, 40b of the third layer 40 suitably facing the inside or the outside of the building, according to thermal requirements, as stated above. Thus, starting from the position shown in figure 1a where the third layer 40 is arranged with its first extension 40a, having PCM, adjacent to the fourth layer 20, facing the inside of the building; and with its second extension 40b, not having PCM, adjacent to the first layer 10, facing the outside of the building, in order to release solar energy accumulated by solidification of the PCM in periods of heating demand, the rollers 50a, 50b can be then caused to be driven in rotation by the control means to reverse the above mentioned position of the extensions 40a, 40b of the third layer 40 shown in figure 1a during the sunlight time so as to be arranged in the position shown in figure 1b. In the above mentioned position in figure 1b, the third layer 40 is arranged with its first extension 40a adjacent to the first layer 10 facing the outside of the building; and with its second extension 40b adjacent to the fourth layer 20 facing the inside of the building, in order to store solar energy by melting of the PCM. The rollers 50a, 50b may be then caused to be driven in rotation cyclically again by the control means to change the position of the extensions 40a, 40b of the third layer 40.

Thus, and as stated above, during summer at night, the third layer 40 can be moved such that one side or extension 40a thereof is arranged adjacent to the outside part of the second insulating layer 30, that is, facing the outside of the building, so as to facilitate the solidification of the PCM, taking advantage of low/moderate temperatures at night, and such that the opposite side or extension 40b thereof is arranged adjacent to the internal part of the second layer or insulating layer 30 facing the inside of the building. From the above described position, the third layer 40 can be moved, through said driving means 50, so as to be in a position reversing the orientations of the extensions 40a, 40b of said third layer 40, as stated above.

The time during which the third layer 40 should remain with its first extension 40a and its second extension 40b facing the outside or the inside of the building depends, inter alia, on the amount of PCM in the first extension 40a of the third layer 40, on the weather conditions, or on the comfort requirements of the inside of the building.

The applicants carried out a study of the thermal structure 100 disclosed herein using computer numerical simulations. A numerical model was used that describes the thermal behavior of walls and roofs, and that allows the amount of heat entering an indoor area of a building to be calculated. For the numerical model a finite volume method was used, and the energy savings provided by the present thermal structure 100 in both winter and summer was quantified. The study was based on the above described thermal structure 100, applied to a traditional building system, which comprised the first said layer 10 arranged outside of the building and said fourth layer 20 arranged inside of the building, both formed by ceramic elements, as well as said second layer 30 of thermal insulating material between said first and fourth layers 10, 20 of the thermal structure 100. The thermal structure 100 of the study was also provided with said third layer 40 containing PCM in one extension 40a thereof. The third layer 40 was arranged between the first and fourth layers 10, 20, so that it was allowed to move, that is, its position could be changed, surrounding the second layer 30.

The graphs in figures 2 and 3 show daily thermal load per surface unit (Wh/m²·day) according to PCM percentage in the third layer and the type of thermal structure, in a cooling mode and in a heating mode, respectively. The daily thermal load illustrated in the graphs shown in figures 2 and 3 is calculated for a building with a building system based on two ceramic layers and 5 cm isolation, operating at a set point temperature of 24 °C in summer and 20 °C in winter under weather conditions of the Csa group by Kottek M, Grieser J, Beck C, Rudolf B, Rubel F. "World map of the Köppen-Geiger climate classification updated". Meteorol. Zeitschrift 2006; 15:259-63.

In particular, the graphs in figures 2 and 3 illustrate how the cooling and heating load of the structure is affected, respectively, by the amount of PCM present in the third layer 40, based on the study conducted on the described thermal structure 100.

More specifically, the graph in figure 2 corresponds to the thermal structure in summer where a positive thermal load represents heat input into the building and a negative thermal load represents heat output from the building. For a conventional static thermal structure, the thermal load is always positive while, for the dynamic thermal structure of the invention, the thermal load is positive and may become negative depending upon the PCM percentage, allowing heat output from the building, which is beneficial in summer. The graph in figure 3 corresponds to the thermal structure in winter where a positive thermal load represents heat output from the building and a negative thermal load heat represents heat input into the building. Similarly, in this case, for a conventional static thermal structure, the thermal load is always positive while, for the dynamic thermal structure of the invention, the thermal load is positive and may become negative depending upon the PCM percentage, allowing in such a case heat input into the building, which is beneficial in winter.

More in detail, the study to which both graphs belong corresponds to a particular geographical area and during a period of ten days of July for figure 2 (cooling mode) for a building indoor temperature of 24°C, and of ten days of November for figure 3 (heating mode), for a building indoor temperature of 20°C. In the above mentioned study, the average daily heat flow per surface for different PCM ratios of the polymeric plate of the third layer 40, whose PCM had a melting temperature of 22°C, was quantified. The average daily heat flow per surface is defined by the amount of heat passing or entering the present thermal structure 100 per square meter a day (Wh/m²·day) and is plotted on the y-axis of the graphs in the above mentioned figures 2 and 3 of the drawings. The x-axis of the graphs in the above mentioned figures corresponds to PCM percentage that is present in the third layer 40 (dynamic PCM layer adjustable towards the inside or towards the outside of the building) of the present thermal structure (values designated by the letter "D" followed by the value of PCM percentage present in the third layer 40) and to percentage of PCM percentage present in a state of the art conventional structure (static PCM layer, inside the building) (values designated by the letter "E" followed by the value of PCM percentage present). From graphs in figures 2 and 3 the average daily heat flow for the present thermal structure 100 in which the third layer 40 can be moved to adjust the PCM towards the inside or towards the outside of the building was compared, as appropriate, as stated above, with the average daily heat flow of a prior art structure where the PCM sheet does not move.

It is noted that no benefit is obtained in winter from the use of PCM in a building envelope in prior art static solutions since temperatures higher than those of melting PCM. In the dynamic solution of the present thermal structure 100, the ability for storing solar energy and to transmit it into the inside of the building advantageously reduces the heating demand per unit area even in solutions where PCM is not applied, obtaining savings of nearly 50%, due to the energy density itself of the polymeric sheet of the third layer 40. When the third layer 40 includes PCM at a rate of 25%, the amount of heat lost on the outside per unit surface is reduced by 89%, and it is zero when PCM is included at a rate of 50%.

It has been shown that the proposed thermal structure 100 has a high efficiency when the third layer 40 includes PCM at a rate of 75% to 100%, where the wall of the building having the present thermal structure 100 not only acts as a thermal barrier, but it acts as a solar radiator, providing heat energy towards the inside of the building in cold days. In the analysed cases, the wall shifts from losing almost 60 Wh/m²·day to provide more than 8 Wh/m²·day, respectively.

In the prior art conventional structure, for the summer period, with a completely static PCM layer, savings of 21.6% are obtained as compared to the case where PCM is not used. On the other hand, in a building having the present thermal structure 100 using PCM in a dynamic arrangement, savings of 29,3% are obtained even without the use of PCM. Such energy impact increases with the amount of PCM, reaching 88, 119, 131 and 136%, in cases with 25%, 50%, 75%, and 100% of PCM in the polymeric sheet of the third layer 40, respectively. It should be noted that, if the third layer 40 of the present thermal structure 100 has 100% of PCM, the wall or roof where the present thermal structure 100 is installed shifts from being an element where a heat flow flows towards the inside, to be an element where the heat flow flows towards the outside. The described thermal structure 100 thus avoids heat from entering the inside of the building while dissipating heat towards the outside during its use in cooling mode.

It has been thus found that with the described present thermal structure 100, an effective solar energy collection is obtained from the outside during cold periods and an effective release of said solar energy towards the inside for conditioning of warming inside spaces in various building systems, significantly reducing heating demand. The effectiveness of the present thermal structure 100 is higher than that of prior art conventional structures used so far, where static PCM layers are used, and even than that of systems based on the controlled use of natural ventilation.

With the dynamic nature of the PCM in the present thermal structure 100 with respect to the insulating layer in the building, which allows the PCM layer to be selectively positioned in the outside part of the second layer or insulating layer 30 during sunshine hours to store heat through the PCM melting process, or in the inside part of the above mentioned insulating layer 30 when there is a heat demand inside the building, disadvantages in prior art static structures relating to limited PCM solidification potential and release of stored heat are efficiently overcome.

Although only one specific example of the present thermal structure has been disclosed herein, those skilled in the art will understand that may other configurations, alternatives, and/or uses thereof as well as obvious modifications and equivalent elements are possible. Thus, the different layers of the present thermal structure may be made of a wide range of other materials and configurations. For the third layer of the present thermal structure, any material capable of absorbing and releasing large amounts of thermal energy when changing phase may be used, apart from PCM. The present description therefore covers all the possible combinations of the particular examples described herein.

Reference signs related to drawings and placed in parentheses in a claim are solely for attempting to increase the intelligibility of the claim, and shall not be construed as limiting the scope of the claim.

The scope of the present disclosure should not be limited by particular examples, but should be determined only by a fair reading of the claims that follow.

## Claims

1. - A thermal structure for buildings (100), the thermal structure (100) comprising at least a first layer (10) facing the inside or the outside of the building, a second layer (30) adjacent to the first layer (10), and a third layer (40) having a sheet configuration with a first extension (40a) and a second extension (40b), at least one of which extensions (40a, 40b) includes a material suitable for absorbing and/or releasing heat according to temperature of the environment where said material is exposed, said third layer (40) being mounted to be able to move surrounding the second layer (30), to arrange the first extension (40a) or the second extension (40b) of the third layer (40) facing the inside or the outside of the building,
wherein the third layer (40) is mounted to the structure (100) surrounding the second layer (30) so that the third (40) layer can be moved around the second layer (30) to arrange the first extension (40a) or the second extension (40b) facing the inside or the outside of the building, according to thermal requirements, wherein the second layer (30) is made of a thermal insulating material, wherein at least one of the first or second extensions (40a, 40b) of the third layer (40) is made of a phase change material (PCM), and wherein the thermal structure (100) further includes driving means (50) to arrange at least part of said first or second extensions (40a, 40b) of the third layer (40) facing the inside or the outside of the building.

2. - The thermal structure for buildings (100) of claim 1, wherein it further comprises at least a fourth layer (20), said first layer (10) facing the outside of the building, and said fourth layer (20) facing the inside of the building, the third layer (40) being arranged such that it can be moved surrounding the second layer (30) between the first layer (10) and the fourth layer (20), so as to arrange the first extension (40a) or the second extension (40b) of the third layer (40) facing the first layer (10) or the fourth layer (20).

3. - The thermal structure for buildings (100) of claim 2, wherein the third layer (40) has a configuration formed of a plurality of particles of a material suitable for absorbing and/or releasing heat according to the temperature of the environment where said material is exposed, said particles being allowed to move between a first space, which defines the first extension (40a) of the third layer (40), between the first layer (10) and the second layer (30), and a second space that defines the second extension (40b) of the third layer (40), between the fourth layer (20) and the second layer (30).

4. - The thermal structure for buildings (100) of any preceding claim, wherein at least one of the first or second extensions (40a, 40b) of the third layer (40) is made of a material suitable for absorbing and/or releasing heat according to the temperature of the environment where said material is exposed.

5. - The thermal structure for buildings (100) of any preceding claim, wherein at least one of the first or the second extensions (40a, 40b) of the third layer (40) is made of an encapsulated and/or microparticle material.

6. - The thermal structure for buildings (100) of any preceding claim, wherein at least one of the first or second extensions (40a, 40b) of the third layer (40) is made of a material applied by direct incorporation, and/or by immersion, and/or by impregnation.

7. - The thermal structure for buildings (100) of any preceding claim, wherein at least one of the first or second extensions (40a, 40b) of the third layer (40) is made of polymeric material.

8. - The thermal structure for buildings (100) of any preceding claim, wherein the driving means (50) comprise opposite rotating rollers around which third layer (40) is arranged.

9. - The thermal structure for buildings (100) of any of the claims 3-7, wherein the driving means (50) comprise an air injection mechanism to cause movement of the particles of said material between the first space formed between the first layer (10) and the second layer (30) and the second space formed between the fourth layer (20) and the second layer (30).

10. - The thermal structure for buildings (100) of any preceding claim, wherein the driving means (50) are manual or motor-driven.

11. - The thermal structure for buildings (100) of any preceding claim, wherein it includes control means for controlling the driving means (50) so as to cause an automatic cyclical movement of the third layer (40) in order to arrange the first or second extensions (40a, 40b) facing the inside or the outside of the building.

12. - The thermal structure for buildings (100) of any of the claims 2 to 11, wherein the third layer (40) at least partially covers the first layer (10) and/or the fourth layer (20).

## Patentansprüche

1. - Eine thermische Struktur für Gebäude (100), wobei die thermische Struktur (100) mindestens eine erste Schicht (10), die der Innenseite oder der Außenseite des Gebäudes zugewandt ist, eine zweite Schicht (30), die an die erste Schicht (10) angrenzt, und eine dritte Schicht (40) mit einer plattenartigen Konfiguration mit einer ersten Ausweitung (40a) und einer zweiten Ausweitung (40b) umfasst, von denen mindestens eine Ausweitung (40a, 40b) ein Material beinhaltet, das geeignet ist, Wärme gemäß der Temperatur der Umgebung, in der dieses Material ausgesetzt ist, zu absorbieren und/oder abzugeben, wobei die dritte Schicht (40) so montiert ist, dass sie um die zweite Schicht (30) herum bewegt werden kann, um die erste Ausweitung (40a) oder die zweite Ausweitung (40b) der dritten Schicht (40) der Innenseite oder der Außenseite des Gebäudes zugewandt anzuordnen,
wobei die dritte Schicht (40) so an der Struktur (100) angebracht ist, dass sie die zweite Schicht (30) umgibt, so dass die dritte Schicht (40) um die zweite Schicht (30) herum bewegt werden kann, um die erste Ausweitung (40a) oder die zweite Ausweitung (40b) der Innenseite oder der Außenseite des Gebäudes je nach den thermischen Anforderungen zugewandt anzuordnen, wobei die zweite Schicht (30) aus einem wärmeisolierenden Material hergestellt ist, wobei mindestens eine der ersten oder der zweiten Ausweitung (40a, 40b) der dritten Schicht (40) aus einem Phasenänderungsmaterial (PCM, *phase change material*) hergestellt ist, und wobei die thermische Struktur (100) ferner ein Antriebsmittel (50) beinhaltet, um mindestens einen Teil der ersten oder der zweiten Ausweitung (40a, 40b) der dritten Schicht (40) der Innenseite oder der Außenseite des Gebäudes zugewandt anzuordnen.

2. - Die thermische Struktur für Gebäude (100) von Anspruch 1, wobei sie ferner mindestens eine vierte Schicht (20) umfasst, wobei die erste Schicht (10) der Außenseite des Gebäudes zugewandt ist und die vierte Schicht (20) der Innenseite des Gebäudes zugewandt ist, wobei die dritte Schicht (40) so angeordnet ist, dass sie um die zweite Schicht (30) zwischen der ersten Schicht (10) und der vierten Schicht (20) herum bewegt werden kann, um die erste Ausweitung (40a) oder die zweite Ausweitung (40b) der dritten Schicht (40) der ersten Schicht (10) oder der vierten Schicht (20) zugewandt anzuordnen.

3. - Die thermische Struktur für Gebäude (100) von Anspruch 2, wobei die dritte Schicht (40) eine Konfiguration hat, die aus einer Vielzahl von Partikeln eines Materials gebildet ist, das zum Absorbieren und/oder Abgeben von Wärme gemäß der Temperatur der Umgebung, in der das Material ausgesetzt ist, geeignet ist, wobei sich die Partikeln zwischen einem ersten Raum, der die erste Ausweitung (40a) der dritten Schicht (40) definiert, zwischen der ersten Schicht (10) und der zweiten Schicht (30), und einem zweiten Raum, der die zweite Ausweitung (40b) der dritten Schicht (40) definiert, zwischen der vierten Schicht (20) und der zweiten Schicht (30), bewegen können.

4. - Die thermische Struktur für Gebäude (100) von einem der vorhergehenden Ansprüche, wobei mindestens eine von der ersten oder der zweiten Ausweitung (40a, 40b) der dritten Schicht (40) aus einem Material hergestellt ist, das zum Absorbieren und/oder Abgeben von Wärme gemäß der Temperatur der Umgebung, in der dieses Material ausgesetzt ist, geeignet ist.

5. - Die thermische Struktur für Gebäude (100) von einem der vorhergehenden Ansprüche, wobei mindestens eine von der ersten oder der zweiten Ausweitung (40a, 40b) der dritten Schicht (40) aus einem eingekapselten Material und/oder einem Mikropartikelmaterial hergestellt ist.

6. - Die thermische Struktur für Gebäude (100) von einem der vorhergehenden Ansprüche, wobei mindestens eine von der ersten oder der zweiten Ausweitung (40a, 40b) der dritten Schicht (40) aus einem Material hergestellt ist, das durch direktes Einbetten und/oder durch Eintauchen und/oder durch Imprägnieren aufgebracht ist.

7. - Die thermische Struktur für Gebäude (100) von einem der vorhergehenden Ansprüche, wobei mindestens eine der ersten oder der zweiten Ausweitung (40a, 40b) der dritten Schicht (40) aus polymerem Material hergestellt ist.

8. - Die thermische Struktur für Gebäude (100) von einem der vorhergehenden Ansprüche, wobei das Antriebsmittel (50) gegenüberliegende rotierende Rollen umfasst, um die die dritte Schicht (40) angeordnet ist.

9. - Die thermische Struktur für Gebäude (100) von einem der Ansprüche 3 bis 7, wobei das Antriebsmittel (50) einen Luftinjektionsmechanismus umfasst, um eine Bewegung der Partikeln des Materials zwischen dem ersten Raum, der zwischen der ersten Schicht (10) und der zweiten Schicht (30) gebildet ist, und dem zweiten Raum, der zwischen der vierten Schicht (20) und der zweiten Schicht (30) gebildet ist, zu bewirken.

10. - Die thermische Struktur für Gebäude (100) von einem der vorhergehenden Ansprüche, wobei das Antriebsmittel (50) manuell oder motorisch angetrieben wird.

11. - Die thermische Struktur für Gebäude (100) von einem der vorhergehenden Ansprüche, wobei sie ein Steuermittel zum Steuern des Antriebsmittels (50) beinhaltet, um eine automatische zyklische Bewegung der dritten Schicht (40) zu bewirken, um die erste oder die zweite Ausweitung (40a, 40b) der Innenseite oder der Außenseite des Gebäudes zugewandt anzuordnen.

12. - Die thermische Struktur für Gebäude (100) von einem der Ansprüche 2 bis 11, wobei die dritte Schicht (40) die erste Schicht (10) und/oder die vierte Schicht (20) zumindest teilweise bedeckt.

## Revendications

1. - Une structure thermique pour bâtiments (100), la structure thermique (100) comprenant au moins une première couche (10) face à l'intérieur ou à l'extérieur du bâtiment, une seconde couche (30) adjacente à la première couche (10), et une troisième couche (40) ayant une configuration de plaque avec une première extension (40a) et une seconde extension (40b), dont au moins une extension (40a, 40b) comprend un matériau apte à absorber et/ou libérer de la chaleur en fonction de la température de l'environnement où ledit matériau est exposé, ladite troisième couche (40) étant montée de manière à pouvoir être déplacée autour de la seconde couche (30), afin de disposer la première extension (40a) ou la seconde extension (40b) de la troisième couche (40) face à l'intérieur ou à l'extérieur du bâtiment,
dans laquelle la troisième couche (40) est attachée à la structure (100) entourant la seconde couche (30) de sorte que la troisième couche (40) peut être déplacée autour de la seconde couche (30) de manière à agencer la première extension (40a) ou la seconde extension (40b) face à l'intérieur ou à l'extérieur du bâtiment, en fonction des exigences thermiques, dans laquelle la seconde couche (30) est réalisée en un matériau isolant thermique, dans laquelle au moins l'une des première ou seconde extensions (40a, 40b) de la troisième couche (40) est réalisée en un matériau à changement de phase (PCM, *phase change material*)*,* et dans laquelle la structure thermique (100) comprend en outre un moyen d'entraînement (50) pour agencer au moins une partie desdites première ou seconde extensions (40a, 40b) de la troisième couche (40) face à l'intérieur ou à l'extérieur du bâtiment.

2. - La structure thermique pour bâtiments (100) de la revendication 1, dans laquelle elle comprend en outre au moins une quatrième couche (20), ladite première couche (10) faisant face à l'extérieur du bâtiment, et ladite quatrième couche (20) faisant face à l'intérieur du bâtiment, la troisième couche (40) étant agencée de telle sorte qu'elle peut être déplacée autour de la seconde couche (30) entre la première couche (10) et la quatrième couche (20), de manière à agencer la première extension (40a) ou la seconde extension (40b) de la troisième couche (40) face à la première couche (10) ou à la quatrième couche (20).

3. - La structure thermique pour bâtiments (100) de la revendication 2, dans laquelle la troisième couche (40) a une configuration formée par une pluralité de particules d'un matériau apte à absorber et/ou libérer de la chaleur en fonction de la température de l'environnement où ledit matériau est exposé, lesdites particules pouvant se déplacer entre un premier espace, qui définit la première extension (40a) de la troisième couche (40), entre la première couche (10) et la seconde couche (30), et un second espace qui définit la seconde extension (40b) de la troisième couche (40), entre la quatrième couche (20) et la seconde couche (30).

4. - La structure thermique pour bâtiments (100) de l'une quelconque des revendications précédentes, dans laquelle au moins l'une des première ou seconde extensions (40a, 40b) de la troisième couche (40) est réalisée en un matériau apte à absorber et/ou libérer de la chaleur en fonction de la température de l'environnement où ledit matériau est exposé.

5. - La structure thermique pour bâtiments (100) de l'une quelconque des revendications précédentes, dans laquelle au moins l'une des première ou seconde extensions (40a, 40b) de la troisième couche (40) est réalisée en un matériau encapsulé et/ou en un matériau microparticulaire.

6. - La structure thermique pour bâtiments (100) de l'une quelconque des revendications précédentes, dans laquelle au moins l'une des première ou seconde extensions (40a, 40b) de la troisième couche (40) est réalisée en un matériau appliqué par incorporation directe, et/ou par immersion, et/ou par imprégnation.

7. - La structure thermique pour bâtiments (100) de l'une quelconque des revendications précédentes, dans laquelle au moins l'une des première ou seconde extensions (40a, 40b) de la troisième couche (40) est réalisée en matériau polymère.

8. - La structure thermique pour bâtiments (100) de l'une quelconque des revendications précédentes, dans laquelle le moyen d'entraînement (50) comprend des rouleaux rotatifs opposés autour desquels la troisième couche (40) est agencée.

9. - La structure thermique pour bâtiments (100) de l'une quelconque des revendications 3 à 7, dans laquelle le moyen d'entraînement (50) comprend un mécanisme d'injection d'air pour provoquer le mouvement des particules dudit matériau entre le premier espace formé entre la première couche (10) et la seconde couche (30) et le second espace formé entre la quatrième couche (20) et la seconde couche (30).

10. - La structure thermique pour bâtiments (100) de l'une quelconque des revendications précédentes, dans laquelle le moyen d'entraînement (50) est manuel ou motorisé.

11. - La structure thermique pour bâtiments (100) de l'une quelconque des revendications précédentes, dans laquelle elle comprend un moyen de commande pour commander le moyen d'entraînement (50) de manière à provoquer un mouvement cyclique automatique de la troisième couche (40) afin de disposer les première ou seconde extensions (40a, 40b) face à l'intérieur ou à l'extérieur du bâtiment.

12. - La structure thermique pour bâtiments (100) de l'une quelconque des revendications 2 à 11, dans laquelle la troisième couche (40) recouvre au moins en partie la première couche (10) et/ou la quatrième couche (20).
